# EUROPEAN PATENT APPLICATION

(11) **EP 4 597 877 A1**
(43) Date of publication of application: **06.08.2025**
(21) Application number: 22960427.7
(22) Date of filing: 30.09.2022
(51) Int. Cl.: H04B 7/155

(54) **RELAY COMMUNICATION METHOD AND APPARATUS AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Dehns Germany Partnerschaft mbB
(86) International application number: PCT/CN2022/123607
(87) International publication number: WO 2024/065819

(57) **Abstract**

The present disclosure relates to a relay communication method and apparatus and a storage medium, applicable to the field of communications, and used to enable a repeater to determine control information to be applied within the range of a time-domain collision. The method comprises: acquiring multiple pieces of control information sent by a network device to a repeater; and determining the occurrence of a time-domain collision between the multiple pieces of control information, and determining, from the multiple pieces of control information, control information to be applied within the range of the time-domain collision.

## Description

### TECHNICAL FIELD

The present disclosure relates to a field of communication technology, and more particularly to a method for relay communication, an apparatus and a storage medium.

### BACKGROUND

Network controlled repeater (NCR) may perform relay communication between a network device and a terminal in a cost-effective manner to improve system coverage. NCR includes two parts: Network controlled repeater Mobile termination (NCR-MT) and Network controlled repeater Forwarding (NCR-Fwd). The NCR-MT is configured to receive a control command sent by a network device, and the control command is configured to control the behavior of the NCR-Fwd, such as beam indication direction, forwarding activation and deactivation, and other control information (Side Control Information, SCI).

When a time-domain conflict occurs among the control information, for example, when a time-domain conflict occurs between a beam indication and another beam indication, i.e., at least some of the application times of the two beams overlap, the NCR-Fwd is unable to select beam information that needs to be applied on an access link between the terminal and the NCR.

### SUMMARY

In order to overcome problems existing in the related art, the present disclosure provides a method for relay communication, an apparatus and a storage medium.

According to a first aspect of the embodiments of the present disclosure, a method for relay communication is provided, the method is performed by a relay device and includes acquiring a plurality of pieces of control information sent by a network device to the relay device; and determining that a time-domain conflict occurs among the plurality of pieces of control information, and determining control information applied within a time-domain conflict range from the plurality of pieces of control information.

In an embodiment, the determining the control information applied within the time-domain conflict range from the plurality of pieces of control information includes: determining priorities of the plurality of pieces of control information; and determining, based on the priorities of the plurality of pieces of control information, the control information applied within the time-domain conflict range.

In an embodiment, the determining the priorities of the plurality of pieces of control information includes:
determining, based on priorities configured or indicated by a communication signaling, the priorities of the plurality of pieces of control information; and/or
determining, based on a predefined rule, the priorities of the plurality of pieces of control information;
where the communication signaling includes at least one of: a dynamic control signaling, a radio resource control signaling RRC signaling, or a media access control control element MAC-CE signaling.

In an embodiment, the determining the priorities of the plurality of pieces of control information based on the priorities configured or indicated by the communication signaling includes: if there is an identical priority among the priorities of the plurality of pieces of control information configured or indicated by the communication signaling, determining priorities of the plurality of pieces of control information corresponding to the identical priority based on at least one of: a temporal order for acquiring the control information corresponding to the identical priority; a time-domain configuration type, or a number of parameters included in the control information.

In an embodiment, the predefined rule is determined based on a time-domain configuration type of the control information in which the time-domain conflict occurs.

In an embodiment, if the time-domain configuration types of the control information in which the time-domain conflict occurs are identical, a priority of control information acquired at a first time is higher than a priority of control information acquired at a second time, where the first time is later than the second time; and
if the time-domain configuration types of the control information in which the time-domain conflict occurs are different, a priority of first control information is higher than a priority of second control information, where the first control information and the second control information are different pieces of control information.

In an embodiment, a priority of first control information is higher than a priority of second control information; and

the first control information is configured or indicated with a priority by the communication signaling, and the second control information is not configured with a priority.

In an embodiment, the control information includes at least one of:
beam information and/or beam group information;
switch information of the relay device, where the switch information is configured to indicate activation or deactivation of the relay device;
uplink-downlink UL-DL time division duplex TDD information; or
power control information of the relay device.

According to a second aspect of the embodiments of the present disclosure, an apparatus for relay communication is provided, applied to a relay device and includes:
a transceiver module, configured to acquire a plurality of pieces of control information sent by a network device to the relay device; and
a processing module, configured to determine that a time-domain conflict occurs among the plurality of pieces of control information, and determining control information applied within a time-domain conflict range from the plurality of pieces of control information.

In an embodiment, the processing module is further configured to:
determine priorities of the plurality of pieces of control information; and determine, based on the priorities of the plurality of pieces of control information, the control information applied within the time-domain conflict range.

In an embodiment, the processing module is further configured to:
determine, based on priorities configured or indicated by a communication signaling, the priorities of the plurality of pieces of control information; and/or
the processing module is further configured to: determine, based on a predefined rule, the priorities of the plurality of pieces of control information;
where the communication signaling includes at least one of: a dynamic control signaling, a radio resource control signaling RRC signaling, or a media access control control element MAC-CE signaling.

In an embodiment, the processing module is further configured to:
determine, if there is an identical priority among the priorities of the plurality of pieces of control information configured or indicated by the communication signaling, priorities of the plurality of pieces of control information corresponding to the identical priority based on at least one of: a temporal order for acquiring the control information corresponding to the identical priority; a time-domain configuration type, or a number of parameters included in the control information.

In an embodiment, the predefined rule is determined based on a time-domain configuration type of the control information in which the time-domain conflict occurs.

In an embodiment, if the time-domain configuration types of the control information in which the time-domain conflict occurs are identical, a priority of control information acquired at a first time is higher than a priority of control information acquired at a second time, where the first time is later than the second time; and
if the time-domain configuration types of the control information in which the time-domain conflict occurs are different, a priority of first control information is higher than a priority of second control information, where the first control information and the second control information are different pieces of control information.

In an embodiment, a priority of first control information is higher than a priority of second control information; and
the first control information is configured or indicated with a priority by the communication signaling, and the second control information is not configured with a priority.

In an embodiment, the control information includes at least one of:
beam information and/or beam group information;
switch information of a relay device, where the switch information is configured to indicate activation or deactivation of the relay device;
uplink-downlink UL-DL time division duplex TDD information; or
power control information of the relay device.

According to a third aspect of the embodiments of the present disclosure, a communication device is provided and includes: a processor; and a memory for storing executable instructions of the processor; where the processor is configured to: perform the method described in the first aspect and any embodiment thereof.

According to a fourth aspect of the embodiments of the present disclosure, a storage medium is provided, the storage medium stores instruction , when the instruction are executed by a processor of a relay device, the relay device performs the method described in the first aspect and any embodiment thereof.

The technical solution provided in the embodiments of the present disclosure may include the following beneficial effects: after acquiring a plurality of pieces of control information sent from a network device to a relay device, if it is determined that a time-domain conflict occurs among the plurality of pieces of control information, the control information applied within the time-domain conflict range is determined from the plurality of pieces of control information. Thus, the problem that the relay device cannot determine the control information applied within the time-domain conflict range when a time-domain conflict occurs is resolved.

It should be understood that the above general description and the detailed description hereinafter are merely exemplary and explanatory, and should not be construed as limiting the present disclosure.

### BRIEF DESCRIPTION OF THE DRAWINGS

The drawings herein are incorporated into the specification and constitute a part thereof, illustrating embodiments consistent with the present disclosure, and are used in conjunction with the specification to explain principles of the present disclosure.
FIG. 1 is a schematic diagram of a wireless communication system according to an exemplary embodiment.
FIG. 2 is a flowchart of a method for relay communication according to an exemplary embodiment.
FIG. 3 is a flowchart of a method for relay communication according to an exemplary embodiment.
FIG. 4 is a flowchart of a method for relay communication according to an exemplary embodiment.
FIG. 5 is a flowchart of a method for relay communication according to an exemplary embodiment.
FIG. 6 is a flowchart of a method for relay communication according to an exemplary embodiment.
FIG. 7 is a block diagram of an apparatus for relay communication according to an exemplary embodiment.
FIG. 8 is a block diagram of an apparatus for relay communication according to an exemplary embodiment.

### DETAILED DESCRIPTION

Detailed descriptions of exemplary embodiments are provided herein, with examples illustrated in the accompanying drawings. In the following description, unless otherwise specified, identical numbers in different drawings indicate identical or similar elements. The embodiments described in the following exemplary embodiments do not represent all possible embodiments consistent with the present disclosure.

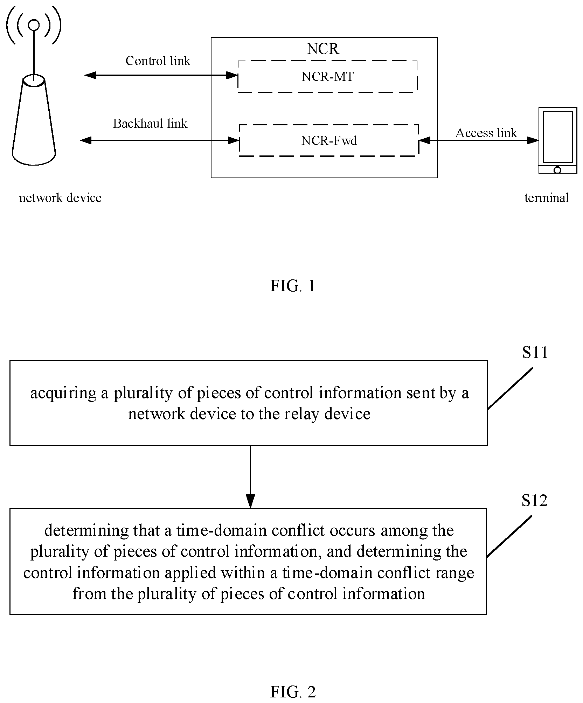

The method for relay communication provided by embodiments of the present disclosure may be performed by a relay communication system shown in FIG. 1. Referring to FIG. 1, the system includes a network device, a Network Controlled Repeater (NCR), and a terminal. The network device performs data transmission with the terminal via the relay device.

The NCR includes two parts: a Network controlled repeater Mobile Termination (NCR-MT) and the Network controlled repeater Forwarding (NCR-Fwd). The NCR-MT is configured to receive a control command sent by the network device via a control link, the control command is configured to control the behavior of the NCR-Fwd, i.e., to control the behavior on a backhaul link and an access link, such as beam indication direction, forwarding activation and deactivation, and other control information (Side Control Information, SCI).

Furthermore, the network device involved in the present disclosure may also be referred to as a radio access network device. The radio access network device may be: a base station, an evolved Node Base station (eNodeB), a home base station, an access point (AP) in a wireless fidelity (WiFi) system, a wireless relay node, a wireless backhaul node, a transmission point (TP), or a transmission and reception point (TRP), and the like. In addition, it may also be a gNB in an NR system or a component or a portion of a device that constitutes a base station, and the like. It should be understood that in the embodiments of the present disclosure, the specific technology and the specific form of device used for the network device are not limited. In the present disclosure, the network device may provide communication coverage for a specific geographic region and communicate with terminals located within the coverage region (cell).

Furthermore, the terminal involved in the present disclosure may also be referred to as a terminal device, user equipment (UE), mobile station (MS), or mobile terminal (MT), and the like, which is a device that provides voice and/or data connectivity for users. For example, the terminal may be a handheld device with wireless connectivity functionality, an in-vehicle device, and the like. Examples of terminals currently include mobile phones, customer premises equipment, pocket personal computers (PPC), personal digital assistants (PDA), laptop computers, tablet computers, wearable devices, or in-vehicle devices. It should be understood that the embodiments of the present disclosure are not limited by the specific technology or device forms adopted by the terminal.

Furthermore, the relay device involved in the present disclosure may also be referred to as a repeater.

In addition, unless otherwise specified, an SCI signaling involved in the embodiments of the present disclosure represents control information (Side Control Information, SCI).

In the related art, the network device may indicate priorities of different channels, for example, by indicating priorities of different Physical Downlink Shared Channels (PDSCH) in Downlink Control Information (DCI). The network device may also notify the terminal of the priority through a predefined rule, and the priority is a priority of beam or certain information received by the terminal. However, whether the network device indicates the priority via a communication signaling or informs the terminal via the predefined rule, the terminal needs to decode the received information to identify the priority.

When a transmission power of the network device is limited and a high-frequency band signal link loss is relatively large, a distant terminal experiences severe signal attenuation, rendering normal demodulation and reception impossible. By adding an NCR in the link, the relay communication between the network device and the terminal may be achieved in a cost-effective manner to improve system coverage and increase system capacity.

The NCR is fully transparent to the terminal, and the NCR does not decode the forwarded information, such as demodulating the forwarded control channel or data channel. Consequently, priority may only be reflected through the control information sent by the network device to the relay device. When a time-domain conflict occurs among the control information, for example, when a beam indication and another beam indication experience a time-domain conflict (i.e., at least partial application times of the two beams overlap), the NCR-Fwd is unable to select the beam information that needs to be applied on the access link between the terminal and the NCR.

Based on this, the embodiments of the present disclosure provide a method for relay communication, so as to determine the control information applied within a time-domain conflict range from a plurality of pieces of control information when the time-domain conflict occurs among the plurality of pieces of control information received by the relay device.

FIG. 2 is a flowchart of a method for relay communication according to an exemplary embodiment. As shown in FIG. 2, the method for relay communication is performed by a relay device and includes the following steps.
in step S11, a plurality of pieces of control information sent by a network device to the relay device are acquired.
in step S12, it is determined that a time-domain conflict occurs among the plurality of pieces of control information, and the control information applied within a time-domain conflict range is determined from the plurality of pieces of control information.

In the embodiments of the present disclosure, after acquiring the plurality of pieces of control information sent by the network device to the relay device, if the time-domain conflict is determined to occur among the plurality of pieces of control information, the control information applied within the time-domain conflict range is determined from the plurality of pieces of control information, thereby solving a drawback that the relay device cannot determine the control information applied within the time-domain conflict range when the time-domain conflict occurs among the control information.

The following describes how to determine the control information applied within the time-domain conflict range from the plurality of pieces of control information.

In the method for relay communication provided in the embodiments of the present disclosure, the control information applied within the time-domain conflict range is determined from the plurality of pieces of control information based on the priorities of the plurality of pieces of control information.

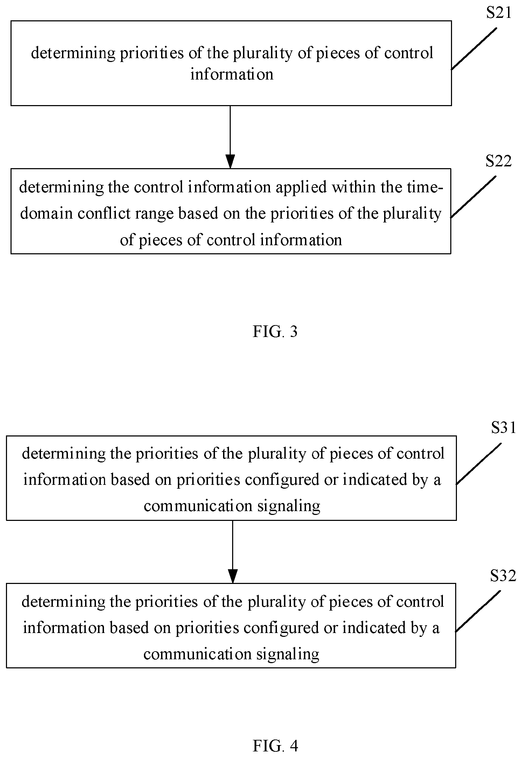

FIG. 3 is a flowchart of a method for relay communication according to an exemplary embodiment. As shown in FIG. 3, the method includes the following steps:
in step S21, priorities of the plurality of pieces of control information are determined.
in step S22, the control information applied within the time-domain conflict range is determined based on the priorities of the plurality of pieces of control information.

In the embodiments of the present disclosure, by determining the priorities of the plurality of pieces of control information and determining the control information applied within the time-domain conflict range based on the priorities of the plurality of pieces of control information, the drawback that the relay device cannot determine the control information applied within the time-domain conflict range when a time-domain conflict occurs in the control information is addressed.

In the method for relay communication provided in the embodiments of the present disclosure, the control information with a highest priority among the plurality of pieces of control information is determined as the control information applied within the time-domain conflict range.

The following describes how to determine the priorities of the plurality of pieces of control information.

In the method for relay communication provided in the embodiments of the present disclosure, the priorities of the plurality of pieces of control information are determined based on priorities configured or indicated by a communication signaling.

FIG. 4 is a flowchart of a method for relay communication according to an exemplary embodiment. As shown in FIG. 4, the method includes the following steps:
in step S31, the priorities of the plurality of pieces of control information are determined based on priorities configured or indicated by a communication signaling.

The communication signaling includes at least one of the following: a dynamic control signaling, a Radio Resource Control RRC signaling, or a Media Access Control Control Element MAC-CE signaling.

The dynamic control signaling includes a DCI signaling and an SCI signaling.

In step S32, the control information applied within the time-domain conflict range is determined based on the priorities of the plurality of pieces of control information.

In an embodiment, based on the priorities configured or indicated by the communication signaling, the control information with a highest priority is determined from the plurality of pieces of control information, and the control information with the highest priority is determined as the control information applied within the time-domain conflict range.

In the method for relay communication provided in the embodiments of the present disclosure, the priorities of the plurality of pieces of control information are determined based on priority bits configured or indicated by a communication signaling.

In an exemplary embodiment, the larger the priority bit, the higher the priority of the control information. Alternatively, the larger the priority bit, the lower the priority of the control information.

For example, the priority bit of control information 1 configured or indicated by the communication signaling is 1, and the priority bit of control information 2 configured or indicated by the communication signaling is 0. When a larger priority bit corresponds to a higher priority, the priority of control information 1 is higher than the priority of control information 2. Furthermore, the control information 1 may be determined as the control information applied within the time-domain conflict range.

In the embodiments of the present disclosure, the manner of determining the priorities of the plurality of pieces of control information based on the priorities configured or indicated by the communication signaling is more flexible. Different priorities may be configured for different pieces of control information based on different priority manners, such that the relay device may determine the control information applied within the time-domain conflict range, thereby solving a drawback that the relay device cannot determine the control information applied within the time-domain conflict range when the time-domain conflict occurs among the control information.

In the method for relay communication provided in the present disclosure, the priorities of the plurality of pieces of control information are determined based on a predefined rule.

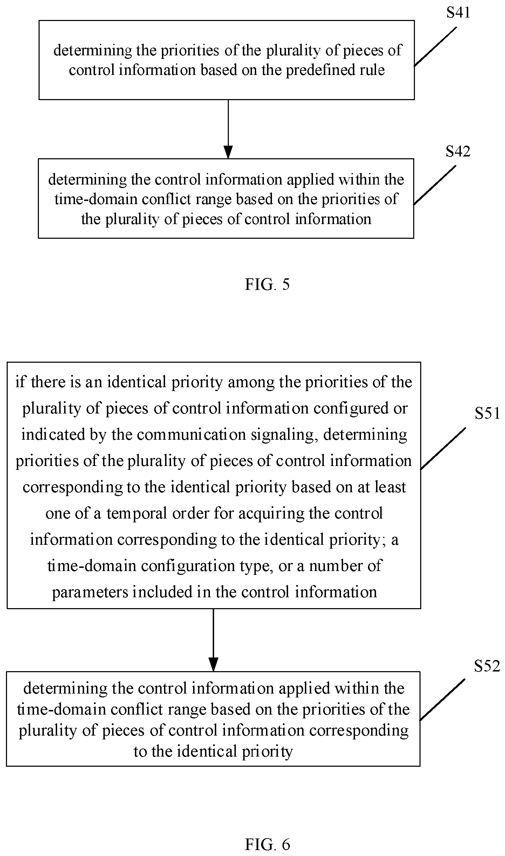

FIG. 5 is a flowchart of a method for relay communication according to an exemplary embodiment. As shown in FIG. 5, the method includes the following steps:
in step S41, the priorities of the plurality of pieces of control information are determined based on the predefined rule;
in step S42, the control information applied within the time-domain conflict range is determined based on the priorities of the plurality of pieces of control information.

In an embodiment, based on the predefined rule, the control information with the highest priority is determined from the plurality of pieces of control information and the control information with the highest priority is determined as the control information applied within the time-domain conflict range.

In the embodiment of the present disclosure, the priorities of the plurality of pieces of control information are determined based on the predefined rule without requiring any additional signaling indication, so as to save signaling overhead, and enable the relay device to determine the control information applied within the time-domain conflict range, thereby solving a drawback that the relay device cannot determine the control information applied within the time-domain conflict range when the time-domain conflict occurs among the control information.

In the method for relay communication provided in the present disclosure, if there is an identical priority among the priorities of the plurality of pieces of control information configured or indicated by the communication signaling, priorities of the plurality of pieces of control information corresponding to the identical priority are determined based on at least one of a temporal order for acquiring the control information corresponding to the identical priority; a time-domain configuration type, or a number of parameters included in the control information.

FIG. 6 is a flowchart of a method for relay communication according to an exemplary embodiment. As shown in FIG. 6, the method includes the following steps:
in step S51, if there is an identical priority among the priorities of the plurality of pieces of control information configured or indicated by the communication signaling, priorities of the plurality of pieces of control information corresponding to the identical priority are determined based on at least one of a temporal order for acquiring the control information corresponding to the identical priority; a time-domain configuration type, or a number of parameters included in the control information.

The time-domain configuration type of the control information includes: a periodic time-domain configuration type, a semi-static time-domain configuration type, and a dynamic time-domain configuration type.

In step S52, the control information applied within the time-domain conflict range is determined based on the priorities of the plurality of pieces of control information corresponding to the identical priority.

In the method for relay communication provided in the embodiments of the present disclosure, the priorities of the plurality of pieces of control information corresponding to the identical priority are determined based on a temporal order for acquiring the control information corresponding to the identical priority.

In an exemplary embodiment, a priority of control information acquired at a first time is higher than a priority of control information acquired at a second time, where the first time is later than the second time.

In the embodiment of the present disclosure, the latest received control information has the highest priority, so as to ensure the timeliness of the application of the control information.

In another embodiment of the method for relay communication provided in the present disclosure, it is determined based on the time-domain configuration type of the acquired control information corresponding to the identical priority.

In an exemplary embodiment, the priority of control information configured with the periodic time-domain configuration is higher than the priority of control information configured with the dynamic time-domain configuration, and the priority of control information configured with the dynamic time-domain configuration is higher than the priority of control information configured with the semi-static time-domain configuration.

For example, when the priority of control information 1 configured with the periodic time-domain configuration and the priority of control information 2 configured with the dynamic time-domain configuration are identical, the priority of control information 1 configured with the periodic time-domain configuration is higher than the priority of control information 2 configured with the dynamic time-domain configuration.

It should be noted that, in the embodiment of the present disclosure, the time for acquiring the control information is not taken into account, and even if a time for acquiring the control information 1 configured with the periodic time-domain configuration is earlier than a time for acquiring the control information 2 configured with the dynamic time-domain configuration, the priority of the control information 1 configured with the periodic time-domain configuration is still higher than that of the control information 2 configured with the dynamic time-domain configuration.

In the embodiment of the present disclosure, the priority of the control information configured with the periodic time-domain configuration is higher than the priority of the control information configured with the dynamic time-domain configuration, and the priority of the control information configured with the dynamic time-domain configuration is higher than the priority of the control information configured with the semi-static time-domain configuration. Thus, a higher priority for cell level signaling can be ensured, and further, this ensures that the control information configured with a more dynamic time-domain configuration has the highest priority.

The above examples are provided merely as illustrations. Another ther priority rule may also be set in the embodiments of the present disclosure, such as prioritizing the control information configured with the dynamic time-domain configuration higher than the priority of the control information of the periodic time-domain configuration may also be set in embodiments of the present disclosure.

In another embodiment of the method for relay communication provided in the present disclosure, it is determined based on a number of parameters included in the acquired control information corresponding to the identical priority.

In an exemplary embodiment, a priority of control information that includes a first number of parameters is higher than a priority of control information that includes a second number of parameters, where the first number is greater than the second number.

For example, if the number of beams included in control information 1 is 3 or the control information 1 includes a beam group, and the number of beams included in control information 2 is 1, the priority of the control information 1 is higher than the priority of the control information 2.

In the embodiment of the present disclosure, the control information including a greater number of parameters among the control information corresponding to the identical priority has a higher priority, so as to ensure higher efficiency in applying the control information.

In the method for relay communication provided in the embodiments of the present disclosure, a predefined rule is determined based on the time-domain configuration type of the control information in which the time-domain conflict occurs.

In the method for relay communication provided in the embodiments of the present disclosure, if time-domain configuration types of the control information in which the time-domain conflict occurs are identical, a priority of control information acquired at a first time is higher than a priority of control information acquired at a second time, where the first time is later than the second time.

Furthermore, the control information acquired at the first time is determined as the control information applied within the time-domain conflict range.

In an exemplary embodiment, if a time-domain conflict occurs between the control information configured with the semi-static time-domain configuration and the control information configured with the semi-static time-domain configuration, the control information acquired at the first time is determined as the control information applied within the time-domain conflict range.

In another exemplary embodiment, if a time-domain conflict occurs between the control information configured with the dynamic time-domain configuration and the control information configured with the dynamic time-domain configuration, the control information acquired at the first time is determined as the control information applied within the time-domain conflict range.

In the embodiment of the present disclosure, when the time-domain configuration types of the control information in which the time-domain conflict occurs are identical, the latest acquired control information is made to have the highest priority through predefinition, so as to ensure the timeliness of the application of the control information.

In the method for relay communication provided in the embodiments of the present disclosure, if the time-domain configuration types of the control information in which the time-domain conflict occurs are different, a priority of first control information is higher than a priority of second control information, where the first control information and the second control information are different pieces of control information.

Furthermore, the first control information is determined as the control information applied within the time-domain conflict range.

In an exemplary embodiment, if the control information configured with the periodic time-domain configuration conflicts with the control information configured with the semi-static time-domain configuration, the control information configured with the semi-static time-domain configuration is determined as the control information applied within the time-domain conflict range.

In an exemplary embodiment, if the control information configured with the periodic time-domain configuration conflicts with the control information configured with the semi-static time-domain configuration, the control information configured with the periodic time-domain configuration is determined as the control information applied within the time-domain conflict range.

In another exemplary embodiment, if the control information configured with the periodic time-domain configuration conflicts with the control information configured with the dynamic time-domain configuration, the control information configured with the dynamic time-domain configuration is determined as the control information applied within the time-domain conflict range.

In another exemplary embodiment, if the control information configured with the periodic time-domain configuration conflicts with the control information configured with the dynamic time-domain configuration, the control information configured with the periodic time-domain configuration is determined as the control information applied within the time-domain conflict range.

In another exemplary embodiment, if the control information configured with the semi-static time-domain configuration conflicts with the control information configured with the dynamic time-domain configuration, the control information configured with the semi-static time-domain configuration is determined as the control information applied within the time-domain conflict range.

In another exemplary embodiment, if the control information configured with the semi-static time-domain configuration conflicts with the control information configured with the dynamic time-domain configuration, the control information configured with the dynamic time-domain configuration is determined as the control information applied within the time-domain conflict range.

In the embodiment of the present disclosure, if the time-domain configuration types of the control information in which the time-domain conflict occurs are different, by predefining that a certain time-domain configuration type has the highest priority, the relay device may determine the control information applied within the time-domain conflict range from the plurality of pieces of control information with different time-domain configuration types based on the predefined time domain configuration type, thereby solving a drawback that the relay device cannot determine the control information applied within the time-domain conflict range when the time-domain conflict occurs among the control information.

In the method for relay communication provided in the embodiments of the present disclosure, the priority of the first control information is higher than the priority of the second control information; the first control information is configured or indicated with a priority by the communication signaling, and the second control information is not configured with a priority.

In the embodiment of the present disclosure, if in the plurality of pieces of control information in which the time-domain conflict occurs, the first control information is configured or indicated with the priority by the communication signaling, and the second control information is not configured or indicated with the priority by the communication signaling, the second control information is configured with a default priority. For example, if the default priority is the highest priority, the priority of the first control information configured or indicated with the priority by the communication signaling is lower than that of the second control information that is not configured or indicated with the priority by the communication signaling.

In the method for relay communication provided in the embodiments of the present disclosure, the control information includes at least one of the following:
A. beam information and/or beam group information;
   the beam information includes at least one of the following: one or a plurality of beam IDs, one or a plurality of beam group IDs, beam type information, or beam width information.
B. switch information of the relay device, where the switch information is used to indicate activation or deactivation of the relay device;
C. UL-DL TDD information;
D. power control information of the relay device.

The control information in the relay communication method of any of the above embodiments may be replaced with any one of A, B, C, or D mentioned above.

The method for relay communication involved in the above embodiments is described below by taking the control information including beam information and/or beam group information as an example.

A scenario where a time-domain conflict occurs for the beam information and/or the beam group information includes at least one of the following:
A. two pieces of beam information and/or beam group information configured with the semi-static time-domain configuration have the time-domain conflict.

In an embodiment, the priorities of the two pieces of beam information and/or beam group information configured with the semi-static time-domain configuration are determined based on the predefined rule.

In an exemplary embodiment, the beam information or beam group information with the most recently acquired semi-static time-domain configuration is always used.

In another embodiment, the priorities of the two pieces of beam information and/or beam group information configured with the semi-static time-domain configuration are determined based on the priority configured or indicated by the communication signaling.

In an exemplary embodiment, a priority bit is added in the communication signaling, and which beam information or beam group information is applied is determined by comparing the priority bits.

The communication signaling may be an RRC signaling or an MAC CE signaling. For example, a piece of beam information configured by the RRC is activated via the MAC CE signaling, which includes a beam ID, an activation command, and a priority bit.

B. two pieces of beam information and/or beam group information configured with the dynamic time-domain configuration have the time-domain conflict.

In an embodiment, the priorities of the two pieces of beam information and/or beam group information configured with the dynamic time-domain configuration are determined based on the predefined rule.

In an exemplary embodiment, the beam information or beam group information with the most recently acquired dynamic time-domain configuration is always used.

In another embodiment, the priorities of the two pieces of beam information and/or beam group information configured with the dynamic time-domain configuration are determined based on the priority configured or indicated by the communication signaling.

In an exemplary embodiment, a priority bit is added in the communication signaling, and which beam or beam group information is applied is determined by comparing the priority bits.

The communication signaling may be an SCI signaling.

C. the beam information and/or beam group information configured with the periodic time-domain configuration and the beam information and/or beam group information configured with the semi-static time-domain configuration have the time-domain conflict.

In an embodiment, the priority of the beam information and/or beam group information configured with the periodic time-domain configuration and the priority of the beam information and/or beam group information configured with the semi-static time-domain configuration are determined based on the predefined rule.

In an exemplary embodiment, it is always ensured that the beam information and/or beam group information configured with the semi-static time-domain configuration has the highest priority.

In another exemplary embodiment, it is always ensured that the beam information and/or beam group information configured with the periodic time-domain configuration has the highest priority.

In another exemplary embodiment, the priority of the beam information and/or beam group information configured with the periodic time-domain configuration and the priority of the beam information and/or beam group information configured with the semi-static time-domain configuration are determined based on the priority configured or indicated by the communication signaling.

In an exemplary embodiment, a priority bit is configured for the beam information and/or beam group information configured with the semi-static time-domain configuration via the communication signaling.

For example, when the priority bit = 0, the priority of the beam information and/or beam group information configured with the periodic time-domain configuration is higher than the priority of the beam information and/or beam group information configured with the semi-static time-domain configuration; when the priority bit = 1, the priority of the beam information and/or beam group information configured with the periodic time-domain configuration is lower than the priority of the beam information and/or beam group information configured with the semi-static time-domain configuration.

In another exemplary embodiment, a priority bit is configured for both the beam information and/or beam group information configured with the periodic time-domain configuration and the beam information and/or beam group information configured with the semi-static time-domain configuration via the communication signaling, and which of the periodic time-domain configuration or semi-static time-domain configuration is to be applied to the beam information or beam group information is determined by comparing priority bits of the two.

D. when the beam information and/or beam group information configured with the periodic time-domain configuration and the beam information and/or beam group information configured with the dynamic time-domain configuration have the time-domain conflict,
in an embodiment, the priority of the beam information and/or beam group information configured with the periodic time-domain configuration and the priority of the beam information and/or beam group information configured with the dynamic time-domain configuration are determined based on the predefined rule.

In an exemplary embodiment, it is always ensured that the beam information and/or beam group information configured with the periodic time-domain configuration has the highest priority.

In another exemplary embodiment, it is always ensured that the beam information and/or beam group information configured with the dynamic time-domain configuration has the highest priority.

In another exemplary embodiment, the priority of the beam information and/or beam group information configured with the periodic time-domain configuration and the priority of the beam information and/or beam group information configured with the dynamic time-domain configuration are determined based on the priority configured or indicated by the communication signaling.

In an exemplary embodiment, a priority bit is configured for the beam information and/or beam group information configured with the dynamic time-domain configuration via the communication signaling.

For example, when the priority bit = 0, the priority of the beam information and/or beam group information configured with the dynamic time-domain configuration is higher than the priority of the beam information and/or beam group information configured with the periodic time-domain configuration; when the priority bit = 1, the priority of the beam information and/or beam group information configured with the dynamic time-domain configuration is lower than the priority of the beam information and/or beam group information configured with the periodic time-domain configuration.

In another exemplary embodiment, a priority bit is configured for both the beam information and/or beam group information configured with the periodic time-domain configuration and the beam information and/or beam group information configured with the dynamic time-domain configuration via the communication signaling, and which of the periodic time-domain configuration or dynamic time-domain configuration is to be applied to the beam information or beam group information is determined by comparing priority bits of the two.

E. the beam information and/or beam group information configured with the semi-static time-domain configuration and the beam information and/or beam group information configured with the dynamic time-domain configuration have the time-domain conflict.

In an embodiment, the priority of the beam information and/or beam group information configured with the semi-static time-domain configuration and the priority of the beam information and/or beam group information configured with the dynamic time-domain configuration are determined based on the predefined rule.

In an exemplary embodiment, it is always ensured that the beam information and/or beam group information configured with the semi-static time-domain configuration has the highest priority.

In another exemplary embodiment, it is always ensured that the beam information and/or beam group information configured with the dynamic time-domain configuration has the highest priority.

In another exemplary embodiment, the priority of the beam information and/or beam group information configured with the semi-static time-domain configuration and the priority of the beam information and/or beam group information configured with the dynamic time-domain configuration are determined based on the priority configured or indicated by the communication signaling.

In an exemplary embodiment, a priority bit is configured for the beam information and/or beam group information configured with the dynamic time-domain configuration via the communication signaling.

For example, when the priority bit = 0, the priority of the beam information and/or beam group information configured with the dynamic time-domain configuration is higher than the priority of the beam information and/or beam group information configured with the semi-static time-domain configuration; when the priority bit = 1, the priority of the beam information and/or beam group information configured with the dynamic time-domain configuration is lower than the priority of the beam information and/or beam group information configured with the semi-static time-domain configuration.

In another exemplary embodiment, a priority bit is configured for both the beam information and/or beam group information configured with the semi-static time-domain configuration and the beam information and/or beam group information configured with the dynamic time-domain configuration via communication signaling, and which of the semi-static time-domain configuration or dynamic time-domain configuration is to be applied to the beam information or beam group information is determined by comparing priority bits of the two.

In the embodiments of the present disclosure, when the time-domain conflict occurs among the beam information and/or beam group information, the beam information or beam group information to be applied is determined based on the predefined rule or based on the priority configured or indicated by the communication signaling, thereby addressing the drawback that the relay device cannot determine the control information applied within the time-domain conflict range when the time-domain conflict occurs among the beam information and/or beam group information.

It should be noted that those skilled in the art may understand that the various embodiments described above in the present disclosure may be used in combination with the foregoing embodiments or independently. Whether used independently or in combination with the foregoing embodiments, the implementation principles are similar. In some embodiments of the present disclosure, descriptions are made by combining multiple embodiments for illustrative purposes. Of course, those skilled in the art may understand that such illustrative descriptions should not be construed as limiting the embodiments of the present disclosure.

Based on the same concept, the embodiments of the present disclosure further provide an apparatus for relay communication.

It should be understood that, to implement the above functions, the apparatus for relay communication provided in the embodiments of the present disclosure includes corresponding hardware structures and/or software modules that perform the respective functions. By combining the units and algorithm steps disclosed in the embodiments of the present disclosure, the embodiment of the present disclosure may be implemented in the form of hardware or a combination of hardware and computer software. Whether a particular function is implemented in hardware or by computer software driving hardware depends on the specific application and design constraints of the technical solution. Those skilled in the art may use different methods to implement the described functions for each specific application, but such implementations should not be considered as exceeding the scope of the technical solution of the embodiments of the present disclosure.

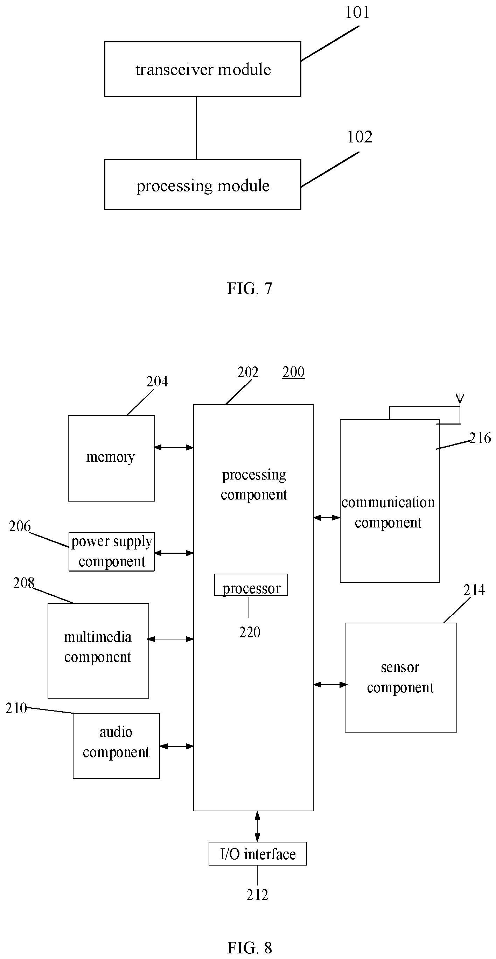

FIG. 7 is a block diagram illustrating an apparatus for relay communication according to an exemplary embodiment. Referring to FIG. 7, the apparatus includes a transceiver module 101 and a processing module 102. The apparatus for relay communication is applied to a relay device.

The transceiver module 101 is configured to acquire a plurality of pieces of control information sent from a network device to the relay device.

The processing module 102 is configured to determine that a time-domain conflict occurs among the plurality of pieces of control information and to determine, from the plurality of pieces of control information, the control information applied within a time-domain conflict range.

In an embodiment, the processing module 102 is further configured to determine priorities of the plurality of pieces of control information and, based on the priorities of the plurality of pieces of control information, determine the control information applied within the time-domain conflict range.

In an embodiment, the processing module 102 is further configured to determine the priorities of the plurality of pieces of control information based on priorities configured or indicated by a communication signaling; and/or
the processing module 102 is further configured to determine the priorities of the plurality of pieces of control information based on a predefined rule.

The communication signaling includes at least one of the following: a dynamic control signaling, a Radio Resource Control RRC signaling, and a Medium Access Control Control Element MAC-CE signaling.

In an embodiment, the processing module 102 is further configured to, if there is an identical priority among the plurality of pieces of control information configured or indicated by the communication signaling, determine priorities of the plurality of pieces of control information corresponding to the identical priority based on at least one of the following: a temporal order for acquiring the control information corresponding to the identical priority, a time-domain configuration type, and a number of parameters included in the control information.

In an embodiment, the predefined rule is determined based on a time-domain configuration type of the control information in which the time-domain conflict occurs.

In an embodiment, if the time-domain configuration types of the control information in which the time-domain conflict occurs are identical, a priority of the control information acquired at a first time is higher than that of the control information acquired at a second time, where the first time is later than the second time;
if the time-domain configuration types of the control information in which the time-domain conflict occurs are different, a priority of first control information is higher than that of second control information, where the first control information and the second control information are different pieces of control information.

In an embodiment, the priority of the first control information is higher than that of the second control information;

The first control information is configured or indicated with a priority by the communication signaling, and the second control information is not configured with a priority.

In an embodiment, the control information includes at least one of the following:
beam information and/or beam group information;
switch information of a relay device, where the switch information is used to indicate activation or deactivation of the relay device;
uplink-Downlink UL-DL Time Division Duplex TDD information; or
power control information of the relay device.

Regarding the apparatus described in the above embodiments, the specific method by which each module performs its operations has been described in detail in the embodiments of the corresponding method and will not be elaborated here.

FIG. 8 is a block diagram illustrating an apparatus 200 for relay communication in accordance with an example of the present disclosure. For example, the apparatus 200 may be a mobile phone, a computer, a digital broadcasting terminal, a messaging device, a game console, a tablet device, a medical device, a fitness device, a personal digital assistant, etc.

As illustrated in FIG. 8, the apparatus 200 may include one or more of the following components: a processing component 202, a memory 204, a power supply component 206, a multimedia component 208, an audio component 210, an input/output (I/O) interface 212, a sensor component 214, and a communication component 216.

The processing component 202 generally controls the overall operations of the apparatus 200, such as operations associated with display, telephone calls, data communications, camera operations, and recording operations. The processing component 202 may include one or more processors 220 to execute instructions to complete all or part of the steps of the foregoing method. In addition, the processing component 202 may include one or more modules to facilitate the interaction between the processing component 202 and other components. For example, the processing component 202 may include a multimedia module to facilitate the interaction between the multimedia component 208 and the processing component 202.

The memory 204 is configured to store various types of data to support the operation of the apparatus 200. Examples of these data include instructions for operating any application or method on the apparatus 200, contact data, phone book data, messages, pictures, videos, etc. The memory 204 may be implemented by any type of volatile or non-volatile storage device or a combination thereof, such as static random access memory (SRAM), electrically erasable programmable read-only memory (EEPROM), erasable and programmable read only memory (EPROM), programmable read only memory (PROM), read only memory (ROM), magnetic memory, flash memory, magnetic disk or optical disk.

The power supply component 206 provides power to various components of the apparatus 200. The power supply component 206 may include a power management system, one or more power supplies, and other components associated with generating, managing, and distributing power for the apparatus 200.

The multimedia component 208 includes a screen that provides an output interface between the apparatus 200 and the user. In some examples, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundary of the touch or swipe action, but also detect the duration and pressure related to the touch or swipe action. In some examples, the multimedia component 208 includes a front-facing camera and/or a rear-facing camera. When the apparatus 200 is in an operation mode, such as a shooting mode or a video mode, the front-facing camera and/or the rear-facing camera may receive external multimedia data. Each of the front-facing camera and rear-facing cameras may be a fixed optical lens system or have focal length and optical zoom capabilities.

The audio component 210 is configured to output and/or input audio signals. For example, the audio component 210 includes a microphone (MIC) that is configured to receive external audio signals when the apparatus 800 is in operating modes, such as call mode, recording mode, and voice recognition mode. The microphone is configured to receive external audio signals. The received audio signal may be further stored in the memory 204 or sent via the communication component 216. In some examples, the audio component 210 further includes a speaker for outputting audio signals.

The I/O interface 212 is configured to provide an interface between the processing component 202 and a peripheral interface module. The above-mentioned peripheral interface module may be a keyboard, a click wheel, a button, and the like. These buttons may include, but are not limited to: home button, volume button, start button, and lock button.

The sensor component 214 includes one or more sensors for providing status assessment of various aspects of the apparatus 200. For example, the sensor component 214 may detect the on/off status of the apparatus 200 and the relative positioning of components, such as the display and keypad of the apparatus 200. The sensor component 214 may also detect a change in the position of the apparatus 200 or a component of the apparatus 200, the presence or absence of contact with the apparatus 200, the orientation or acceleration/deceleration of the apparatus 200 and the temperature change of the apparatus 200. The sensor component 214 may include a proximity sensor configured to detect the presence of nearby objects in the absence of any physical contact. The sensor component 214 may also include a light sensor, such as a complementary metal oxide semiconductor (CMOS) or charge-coupled device (CCD) image sensor, for use in imaging applications. In some examples, the sensor component 214 may also include an acceleration sensor, a gyroscope sensor, a magnetic sensor, a pressure sensor, or a temperature sensor.

The communication component 216 is configured to facilitate wired or wireless communication between the apparatus 200 and other devices. The apparatus 200 may access a wireless network based on a communication standard, such as WiFi, 2G, or 3G, or a combination thereof. In some examples, the communication component 216 receives broadcast signals or broadcast related information from an external broadcast management system via a broadcast channel. In an example, the communication component 216 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some examples, the apparatus 200 may be implemented by one or more application specific integrated circuits (ASIC), digital signal processors (DSP), digital signal processing equipment (DSPD), programmable logic devices (PLD), field programmable Agate array (FPGA), controller, microcontroller, microprocessor, or other electronic component implementation for performing the above methods.

In an example, there is also provided a non-transitory computer-readable storage medium including instructions, such as a memory 204 including instructions. The instructions are executable by the processor 220 of the apparatus 200 to perform the above method. For example, the non-transitory computer-readable storage medium may be ROM, random access memory (RAM), CD-ROM, magnetic tape, floppy disk, optical data storage device, and the like.

It should be understood that in the present disclosure, "a plurality of" refers to two or more than two, and other quantifiers are similar. The term "and/or" describes the association relationship of the associated object, indicating three types of relationships, for example only A, only B, or both A and B. The character "/" generally indicates that the associated objects before and after are in an "or" relationship. The singular forms "a", "said" and "the" are also intended to include plural forms, unless the context clearly indicates other meanings.

It should be understood that the terms "first", "second", etc. are used to describe various information, but the information should not be limited to these terms. These terms are only used to distinguish the same type of information from each other, and do not indicate a specific order or degree of importance. In fact, expressions such as "first" and "second" may be used interchangeably. For example, without departing from the scope of the present disclosure, the first information may also be referred to as second information, and similarly, the second information may also be referred to as first information.

It should be understood that although the operations in examples of the present disclosure are described in a specific order in the drawings, they should not be understood as requiring these operations to be performed in the specific order shown or in a serial order, or requiring to perform all the operations shown to get the desired result. In certain circumstances, multitasking and parallel processing may be advantageous.

Those skilled in the art will easily think of other examples of the present disclosure after considering the specification and practicing the present disclosure described herein. This disclosure is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as examples only, and the true scope and spirit of the present disclosure are pointed out by the following claims.

It should be understood that the present disclosure is not limited to the precise structure that has been described above and shown in the drawings, and various modifications and changes may be made without departing from its scope. The scope of the present disclosure is only limited by the appended claims.

## Claims

1. A method for relay communication, performed by a relay device, comprising:
acquiring a plurality of pieces of control information sent by a network device to the relay device; and
determining that a time-domain conflict occurs among the plurality of pieces of control information, and determining control information applied within a time-domain conflict range from the plurality of pieces of control information.

2. The method according to claim 1, wherein the determining the control information applied within the time-domain conflict range from the plurality of pieces of control information comprises:
determining priorities of the plurality of pieces of control information; and
determining, based on the priorities of the plurality of pieces of control information, the control information applied within the time-domain conflict range.

3. The method according to claim 2, wherein the determining the priorities of the plurality of pieces of control information comprises:
determining, based on priorities configured or indicated by a communication signaling, the priorities of the plurality of pieces of control information; and/or
determining, based on a predefined rule, the priorities of the plurality of pieces of control information;
wherein the communication signaling comprises at least one of: a dynamic control signaling, a radio resource control signaling RRC signaling, or a media access control control element MAC-CE signaling.

4. The method according to claim 3, wherein the determining the priorities of the plurality of pieces of control information based on the priorities configured or indicated by the communication signaling comprises:
if there is an identical priority among the priorities of the plurality of pieces of control information configured or indicated by the communication signaling, determining priorities of the plurality of pieces of control information corresponding to the identical priority based on at least one of:
a temporal order for acquiring the control information corresponding to the identical priority;
a time-domain configuration type, or
a number of parameters comprised in the control information.

5. The method according to claim 3, wherein the predefined rule is determined based on a time-domain configuration type of the control information in which the time-domain conflict occurs.

6. The method according to claim 5, wherein if the time-domain configuration types of the control information in which the time-domain conflict occurs are identical, a priority of control information acquired at a first time is higher than a priority of control information acquired at a second time, wherein the first time is later than the second time; and
if the time-domain configuration types of the control information in which the time-domain conflict occurs are different, a priority of first control information is higher than a priority of second control information, wherein the first control information and the second control information are different pieces of control information.

7. The method according to claim 2 or 3, wherein a priority of first control information is higher than a priority of second control information; and
the first control information is configured or indicated with a priority by the communication signaling, and the second control information is not configured with a priority.

8. The method according to any one of claims 1 to 7, wherein the control information comprises at least one of:
beam information and/or beam group information;
switch information of the relay device, wherein the switch information is configured to indicate activation or deactivation of the relay device;
uplink-downlink UL-DL time division duplex TDD information; or
power control information of the relay device.

9. An apparatus for relay communication, comprising:
a transceiver module, configured to acquire a plurality of pieces of control information sent by a network device to the apparatus; and
a processing module, configured to determine that a time-domain conflict occurs among the plurality of pieces of control information, and determining control information applied within a time-domain conflict range from the plurality of pieces of control information.

10. The apparatus according to claim 9, wherein the processing module is further configured to:
determine priorities of the plurality of pieces of control information; and
determine, based on the priorities of the plurality of pieces of control information, the control information applied within the time-domain conflict range.

11. The apparatus according to claim 10, wherein the processing module is further configured to:
determine, based on priorities configured or indicated by a communication signaling, the priorities of the plurality of pieces of control information; and/or
the processing module is further configured to:
determine, based on a predefined rule, the priorities of the plurality of pieces of control information;
wherein the communication signaling comprises at least one of:
a dynamic control signaling,
a radio resource control signaling RRC signaling, or
a media access control control element MAC-CE signaling.

12. The apparatus according to claim 11, wherein the processing module is further configured to:
determine, if there is an identical priority among the priorities of the plurality of pieces of control information configured or indicated by the communication signaling, priorities of the plurality of pieces of control information corresponding to the identical priority based on at least one of:
a temporal order for acquiring the control information corresponding to the identical priority;
a time-domain configuration type, or
a number of parameters comprised in the control information.

13. The apparatus according to claim 12, wherein the predefined rule is determined based on a time-domain configuration type of the control information in which the time-domain conflict occurs.

14. The apparatus according to claim 13, wherein if the time-domain configuration types of the control information in which the time-domain conflict occurs are identical, a priority of control information acquired at a first time is higher than a priority of control information acquired at a second time, wherein the first time is later than the second time; and
if the time-domain configuration types of the control information in which the time-domain conflict occurs are different, a priority of first control information is higher than a priority of second control information, wherein the first control information and the second control information are different pieces of control information.

15. The apparatus according to claim 10 or 11, wherein a priority of first control information is higher than a priority of second control information; and
the first control information is configured or indicated with a priority by the communication signaling, and the second control information is not configured with a priority.

16. The apparatus according to any one of claims 9 to 15, wherein the control information comprises at least one of:
beam information and/or beam group information;
switch information of a relay device, wherein the switch information is configured to indicate activation or deactivation of the relay device;
uplink-downlink UL-DL time division duplex TDD information; or
power control information of the relay device.

17. A communication device, comprising:
a processor; and
a memory for storing executable instructions of the processor;
wherein the processor is configured to: perform the method according to any one of claims 1 to 8.

18. A storage medium storing instruction, when the instruction are executed by a processor of a relay device, the relay device performs the method according to any one of claims 1 to 8.
